# EUROPÄISCHE PATENTSCHRIFT

(11) **EP 2 814 710 B1**
(45) Veröffentlichungstag und Bekanntmachung des Hinweises auf die Patenterteilung: **27.01.2016**
(21) Anmeldenummer: 13703730.5
(22) Anmeldetag: 02.02.2013
(51) Int. Cl.: B61B 3/02, B65G 47/64, B65G 9/00

(54) **FÖRDERVORRICHTUNG**
CONVEYOR APPARATUS
DISPOSITIF TRANSPORTEUR

(30) Priorität: 14.02.2012 DE 102012002912
(43) Veröffentlichungstag der Anmeldung: 24.12.2014
(73) Patentinhaber: Volkswagen Aktiengesellschaft, 38440 Wolfsburg (DE)
(72) Erfinder: SCHULZ, Christian, 38446 Wolfsburg (DE); GEHWEILER, Günter, 38154 Königslutter (DE); RIETIG, Carsten, 38442 Wolfsburg (DE); KICK, Marco, 38444 Wolfsburg (DE)
(86) Internationale Anmeldenummer: PCT/EP2013/000331
(87) Internationale Veröffentlichungsnummer: WO 2013/120587

(56) Entgegenhaltungen:
- EP-A1- 0 496 475
- GB-A- 232 503
- GB-A- 288 513
- US-A- 1 034 618

## Beschreibung

Die Erfindung betrifft eine insbesondere schwerkraftbetriebene Fördervorrichtung mit zumindest einem an einer Führungsschiene beweglich angeordneten Laufwagen und mit einem einen Schienenabschnitt tragenden beweglichen Element, welches entweder in eine mit einem ersten Anschlussschienenelement oder in eine mit einem zweiten Anschlussschienenelement verbundene Position bewegbar ist, um den Laufwagen von einem ersten Anschlussschienenelement zu einem zweiten Anschlussschienenelement zu überführen.

Derartige Fördervorrichtungen werden beispielsweise in der Automobilindustrie zum Transport von Fahrzeugkomponenten eingesetzt. Hierzu verläuft ein System von Führungsschienen insbesondere deckennah durch die Produktionsbereiche, um so die Fahrzeugkomponenten, die hierzu jeweils an einem oder mehreren Laufwagen hängend angeordnet sind, der entsprechenden Weiterverarbeitung zuzuführen. Im Allgemeinen wird dabei die Schwerkraft zum Antrieb der Laufwagen genutzt, wobei selbstverständlich abschnittsweise Stationen zur Übertragung einer Antriebsleistung vorgesehen sein können.

Förderbahnen mit entsprechenden an Decken oder Tragschienen aufgehängten Laufschienen werden auch in Schlachthöfen und Kühlhäusern eingesetzt. Einzelne Schienenstränge sind durch Weichen miteinander verbunden, die von Hand in die gewünschte Richtung umgeschaltet werden. Eine solche Weiche, die zwei sich gabelnde Verbindungsabschnitte umfasst, beschreibt beispielsweise die DE 2 233 093 B. Um Fehlfunktionen der Weiche zu vermeiden, ist an dem aus seiner Verbindungsstellung herausschwenkbaren Verbindungsabschnitt ein Bügel angeordnet, welcher den anderen Verbindungsabschnitt umspannt und in der Endlage der aus der Verbindungsstellung ausgeschwenkten Stellung des Verbindungsabschnitts einer selbsttätigen, von Hand lösbaren Verriegelung mit dem freien Ende der Anschlussschiene dient. Dadurch bleibt die Verbindung der beiden sich gabelnden Verbindungsabschnitte der Weiche mit den Schienenenden unabhängig von der Weichenstellung erhalten.

Die WO 2008/061388 A1 beschreibt eine Weiche zum selektiven Verbinden dreier Führungsmittel zum geführten Bewegen wenigstens einer Laufrolle eines Fördermittels. Dabei kann ein passiver Selbstauslösemechanismus zum Einsatz kommen, der dann aktiviert wird, wenn Gegenstände auf einen Schalthebel in einem Führungsmittelabschnitt oder an einem Stellelement auffahren und dadurch die notwendige Schaltkraft selbst erzeugen.

Eine Hängefördereinrichtung zur Verwendung in der Bekleidungsindustrie ist ferner noch aus der WO 2008/098781 A1 bekannt. Diese wird zum Transport von an Kleiderbügeln hängenden Bekleidungsstücken genutzt. Zum Ausschleusen von Fördergutträgern aus einer Förderstrecke wird der mittels der Ausschleusweichenzunge auszuschleusende Fördergutträger aus dem Führungseingriff mit der ersten Führungsschiene freigegeben. Die Ausschleusweichenzunge kann somit die freie Laufrolle eines betreffenden Bügelträgers in Führungseingriff nehmen, wobei die andere Laufrolle kurz darauf die Führungsprofilaussparung der ersten Führungsschiene erreicht. Die bis dahin an der ersten Führungsschiene geführte Laufrolle kann dann, ohne angehoben werden zu müssen, die Führungsprofilaussparung durchqueren.

*Aus den Dokumenten* US 1,034,618 *und* GB 232,503 *sind Fördereinrichtungen bekannt, bei denen ein Transportgut auf einem Rollenfördersystem bewegt werden kann. Um dort Höhenunterschiede zu überwinden oder eine Änderung der Transportbewegungsrichtung zu erreichen ist dort ein Wippensystem vorgesehen, über das ein vertikal oben liegender Schienenabschnitt mit einem vertikal unten liegenden Schienenabschnitt verbindbar ist. Dabei ist die Position des beweglichen Schienenteils jedoch nicht in jeder Phase sicher festgelegt.*

Vor diesem Hintergrund liegt der Erfindung die Aufgabe zugrunde, eine Fördervorrichtung der eingangs genannten Art weiter zu verbessern und insbesondere einen Laufwagen bedarfsweise einer anderen Ebene zuführen zu *können und dabei die Position des beweglichen Elementes sicher zu fixieren.*

Diese Aufgabe wird gelöst mit einer Vorrichtung gemäß den Merkmalen des Patentanspruchs 1. Die Unteransprüche betreffen besonders zweckmäßige Weiterbildungen der Erfindung.

Erfindungsgemäß sind also die beiden Anschlussschienenelemente in unterschiedlichen, vertikal zueinander beabstandeten Ebenen angeordnet, wobei das bewegliche Element als ein um eine im Wesentlichen horizontale Achse von einer oberen Position, in welcher der Schienenabschnitt mit dem ersten Anschlussschienenelement verbunden ist, in eine untere Position, in welcher der Schienenabschnitt mit dem zweiten Anschlussschienenelement verbunden ist, schwenkbeweglicher Schwenkarm ausgeführt ist. Hierdurch wird eine Möglichkeit zur Überbrückung von in zumindest zwei Ebenen angeordneten Anschlussschienenelementen geschaffen. Diese sind nicht gleichzeitig, sondern abwechselnd mit dem Schwenkarm verbunden. Hierzu wird der Schwenkarm einschließlich dem zumindest einen an dem Schienenabschnitt angeordneten Laufwagen abgesenkt, sodass derselbe Endabschnitt des Schwenkarms in der oberen Position gegen das erste Anschlussschienenelement und in der unteren Position gegen das zweite Anschlussschienenelement anliegt. Auf diese Weise wird eine kompakte Vorrichtung geschaffen, durch die ein oder mehrere Laufwagen der oberen Ebene in eine untere Ebene umgesetzt werden können. Die Fördervorrichtung kann dabei einen mit Rollen oder Gleitelementen ausgestatteten Laufwagen aufweisen, welcher vorzugsweise hängend an der Führungsschiene angeordnet ist oder auf dieser aufliegt.

Die Bewegung des Schwenkarms könnte beispielsweise mittels einer Steuerung eingeleitet werden.

Besonders vorteilhaft ist eine Ausführungsform der Erfindung, bei welcher der Schwenkarm entgegen einer Rückstellkraft von einer oberen Position durch eine Belastung durch zumindest einen Laufwagen oder einer zusätzlichen, mit zumindest einem Laufwagen verbundenen Traglast in die untere Position absenkbar ausgeführt ist und bei welcher der von dem Laufwagen entlastete Schwenkarm aufgrund der Rückstellkraft entgegen der Schwerkraft selbsttätig in die obere Position beweglich ist. Indem also die Absenkbewegung durch das Eigengewicht des Laufwagens oder des zusätzlich mit einer Traglast, beispielsweise einer Fahrzeugkomponente, belasteten Laufwagens eingeleitet wird, sind zusätzliche Antriebselemente für den beweglichen Schwenkarm der Fördervorrichtung ebenso entbehrlich wie eine entsprechende Steuerung. Vielmehr folgt der Schwenkarm lediglich der Schwerkraft, wobei die Rückstellkraft ein Absenken des Schwenkarms allein unter dem Einfluss seines Eigengewichts verhindert. Indem also die Rückstellkraft zumindest dem Ausgleich des Eigengewichts des Schwenkarms dient, führt also eine Mehrbelastung zu einer kontrollierten Absenkung des Schwenkarms und bei anschließender Entlastung nach der Übergabe des Laufwagens an das zweite Anschlussschienenelement zu einer selbsttätigen Rückkehr des Schwenkarms in eine mit dem ersten Anschlussschienenelement korrespondierende Position. Um sowohl das Einlaufen als auch das zuverlässige Auslaufen des Laufwagens in bzw. von dem Schwenkarm sicherzustellen, weist dieser sowohl in seiner mit dem ersten Anschlussschienenelement sowie in seiner mit dem zweiten Anschlussschienenelement verbundenen Position eine Neigung gegenüber der Horizontalen auf, die eine entsprechende Beschleunigung des Laufwagens nach seiner Freigabe ohne zusätzliche Antriebsleistungen sicherstellt. Vorzugsweise stimmt das Gefälle in beiden Funktionsstellungen des Schwenkarms überein.

Die Rückstellkraft könnte beispielsweise durch ein beim Absenken komprimiertes Medium, vorzugsweise ein Fluid erreicht werden, um so den erzeugten Druck zur Einleitung der Rückstellbewegung nutzen zu können. Besonders vorteilhaft ist es, wenn die Rückstellkraft durch ein Federelement und/oder ein Gegengewicht einleitbar ist, welches auf den Schwenkarm wirkt und die beim Absenken erzeugte Vorspannkraft in eine entsprechende Rückstellbewegung umsetzt. Beispielsweise kann hierzu eine insbesondere auch in die Schwenkachse integrierte Torsionsfeder genutzt werden. Weiterhin kann das Federelement auch in einen Federzug integriert sein, welcher mit einem Zugmittel an dem Schwenkarm festlegbar ist. Ergänzend oder alternativ kann durch ein Gegengewicht ein nahezu vollständiger Gewichtsausgleich geschaffen werden, um so eine unerwünschte Beschleunigung bei der Rückstellbewegung zu vermindern.

Dabei hat es sich bereits als besonders praxisgerecht erwiesen, wenn der Schwenkarm als ein Doppelhebelarm ausgeführt und das Federelement oder das Gegengewicht an einem dem Schienenabschnitt abgewandten Arm angeordnet ist. Hierdurch kann auf die Anordnung von Federelementen oder Rückstellmitteln an dem den Schienenabschnitt tragenden Arm verzichtet werden, um so eine konstruktiv einfache Ausführung zu erreichen. Beispielsweise kann an dem freien Hebelarm ein Gegengewicht zur Einstellung verschiebbar angeordnet sein.

Als besonders praxisgerecht hat es sich auch bereits erwiesen, wenn dem Schwenkarm ein Dämpfer zugeordnet ist, welcher die Absenkgeschwindigkeit reduziert, sodass beispielsweise durch einen Gasdruckdämpfer eine gedämpfte Absenkbewegung erreicht und eine Beschädigung der Fördervorrichtung oder ein Entgleisen des Laufwagens zuverlässig ausgeschlossen werden kann. Auf diese Weise kann die Absenkgeschwindigkeit insbesondere auch bei wechselnder Belastung auf ein gewünschtes Maß beschränkt werden.

Denkbar ist eine Ausführungsform, bei welcher der Schwenkarm im Wesentlichen frei pendelnd aufgehängt ist und lediglich aufgrund des Verhältnisses zwischen der Belastung durch den Laufwagen einerseits und die Rückstellkraft andererseits die obere oder untere Position einnimmt. Als besonders sinnvoll hat sich demgegenüber jedoch bereits eine Variante erwiesen, bei welcher die obere Position und/oder die untere Position des Schwenkarms durch ein Sicherungselement festlegbar ist. Bei dieser Variante der Erfindung ist der Schwenkarm in der oberen Position und in der unteren Position gesichert, in welchen dieser selbsttätig verrastet. Die jeweilige Absenk- oder Rückstellbewegung wird daher separat ausgelöst und daher nicht unmittelbar aufgrund des wirkenden Kräfteverhältnisses eingeleitet. Beispielsweise kann also die Freigabe in Abhängigkeit eines freien Laufwagens oder eines durch einen vorhergehenden Laufwagen besetzten Abschnitts des zweiten Anschlussschienenelements erfolgen und mittels einer geeigneten Sensorik oder mechanisch bzw. manuell erfasst bzw. eingeleitet werden.

Bei einer anderen, ebenfalls besonders sinnvollen Ausgestaltung der Erfindung ist die Absenkbewegung bei Erreichen einer vorbestimmten Position des Laufwagens auf dem Schienenabschnitt berührend oder berührungslos auslösbar. Hierdurch wird sichergestellt, dass der Laufwagen vor Beginn der Absenkbewegung seine vorbestimmte Position eingenommen hat. Selbstverständlich kann diese Position des Laufwagens auch auf die jeweilige Position mehrerer Laufwagen erweitert werden. Die Betriebssicherheit der Vorrichtung wird dadurch wesentlich verbessert. Alternativ oder ergänzend kann auch eine zeitlich verzögerte Freigabe des den Schwenkarm hierzu in der oberen Position fixierenden Sicherungselements vorgesehen werden.

In vergleichbarer Weise wird gemäß einer ebenfalls bevorzugten Variante die Rückstellbewegung von der unteren Position in die obere Position durch den Laufwagen bei Erreichen einer vorbestimmten Position des Laufwagens auf dem zweiten Anschlussschienenelement berührend oder berührungslos ausgelöst. Hierdurch erfolgt die Freigabe der Rückstellbewegung rein mechanisch aus der unteren Position erst dann, wenn der Laufwagen oder der letzte Laufwagen einer Reihe von mehreren Laufwagen den Schienenabschnitt des Schwenkarms vollständig verlassen hat.

Der Schienenabschnitt könnte einen rampenförmigen Bereich aufweisen, durch den die Bewegung durch eine zunehmende Steigung begrenzt wird. Besonders vorteilhaft ist es, wenn der Schwenkarm mit einem Anlagekörper für den Laufwagen ausgestattet ist, welcher eine definierte Position des Laufwagens während der Absenkbewegung sicherstellt. Durch die so definierte Position des Laufwagens auf dem Schwenkarm wird zugleich dessen Belastung begrenzt. Ergänzend kann vorgesehen sein, dass der Anlagekörper den Laufwagen während der Absenkbewegung solange fixiert, bis der Schwenkarm die untere Position erreicht hat, um so ein frühzeitiges Auslaufen des Laufwagens von dem Schwenkarm zu verhindern. Hierzu kann beispielsweise auch eine Rücklaufsperre für den Laufwagen vorgesehen werden, die in der unteren Position selbsttätig auslöst.

Die Schwenkachse des Schwenkarms könnte gegenüber der Vertikalen geneigt angeordnet sein, um so neben der rein vertikalen Bewegungskomponente auch eine seitliche Bewegungskomponente bei der Absenkbewegung zu erreichen. Das erste Anschlussschienenelement und das zweite Anschlussschienenelement liegen dann nicht lediglich in unterschiedlichen Ebenen, sondern weisen auch einen seitlichen Versatz auf, welcher insbesondere bei vergleichsweise großen, an dem Laufwagen hängend angeordneten Komponenten und dem damit verbundenen Platzbedarf vorteilhaft sein kann. Besonders einfach ist eine Variante bei welcher die Schwenkachse in einer zwischen der oberen Ebene und der unteren Ebene verlaufenden Ebene horizontal verläuft.

Denkbar sind auch Ausgestaltungen, bei denen der Schwenkarm bei der Absenkbewegung und bei der Rückstellbewegung in derselben Drehrichtung in Bezug auf die Schwenkachse dreht. Vorzugsweise weist die Fördervorrichtung jedoch genau zwei Anschlussschienenelemente auf, welche übereinander angeordnet sind, sodass die Einfahrrichtung und die Ausfahrrichtung entgegengesetzt sind.

Die Erfindung lässt zahlreiche Ausführungsformen zu. Zur weiteren Verdeutlichung ihres Grundprinzips ist eine davon in den Figuren dargestellt und wird nachfolgend beschrieben. Diese zeigt jeweils in einer Seitenansicht einer erfindungsgemäßen Fördervorrichtung in
- Fig. 1: eine mit einem ersten Anschlussschienenelement verbundene obere Position eines Schwenkarms;
- Fig. 2: eine mit einem zweiten Anschlussschienenelement verbundene untere Position des Schwenkarms.

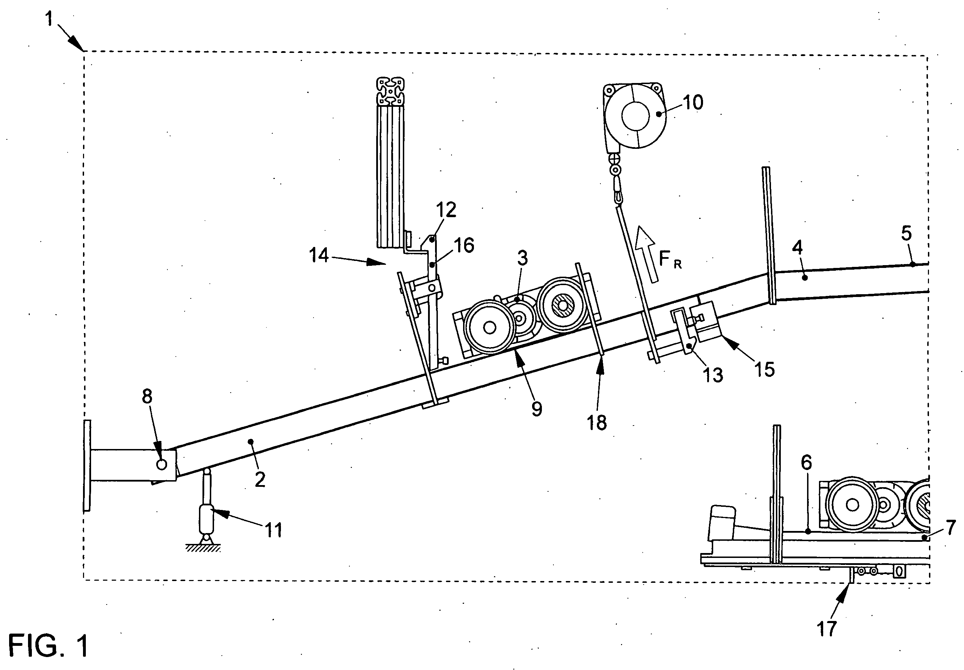

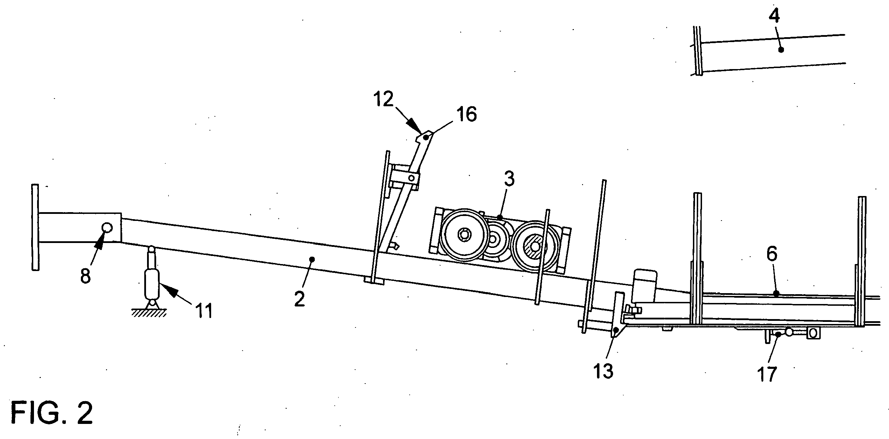

Die erfindungsgemäße Fördervorrichtung 1 wird nachstehend anhand der Figuren 1 und 2 erläutert, welche die beiden Funktionsstellungen eines Schwenkarms 2 der Fördervorrichtung 1 zeigen. Die Fördervorrichtung 1 ist ausschließlich schwerkraftbetrieben, sodass zusätzliche Antriebs- oder Steuerungselemente entfallen können. Erfindungsgemäß dient die Fördervorrichtung 1 der Umsetzung eines Laufwagens 3 von einem Anschlussschienenelement 4 einer ersten Ebene 5 in einer oberen Position auf ein Anschlussschienenelement 6 in einer darunter liegenden zweiten Ebene 7 unter beengten Raumverhältnissen. Der Schwenkarm 2 ist dabei einseitig an einem den beiden Anschlussschienenelementen 4, 6 abgewandten Ende einer horizontalen Schwenkachse 8 gelagert. Der Schwenkarm 2 trägt zu diesem Zweck einen mit den Anschlussschienenelementen 4, 6 entsprechend kompatiblen Schienenabschnitt 9, um so wahlweise eine Verbindung mit dem ersten oder dem zweiten Anschlussschienenelement 4, 6 herstellen zu können. Der Schwenkarm 2 ist allein durch die Belastung mit dem Laufwagen 3, gegebenenfalls in Verbindung mit einer nicht dargestellten Traglast, entgegen einer Rückstellkraft F_{R} eines Federelements 10 von seiner oberen Position in die untere Position absenkbar ausgeführt. Die so gewonnene Rückstellkraft F_{R} genügt, um den Schwenkarm 2 entgegen der Schwerkraft selbsttätig in die obere Position zurück zu schwenken. Ein lediglich andeutungsweise dargestellter Dämpfer 11 dient dabei der Begrenzung der Absenkgeschwindigkeit. Der Schwenkarm 2 ist nicht frei pendelnd ausgeführt, sondern rastet bei Erreichen der oberen sowie der unteren Position selbsttätig in eine jeweilige Sperrklinke 12, 13 eines ersten bzw. eines zweiten Sicherungselements 14, 15 ein. Die Absenkbewegung beginnt daher erst mit der Freigabe der Sperrklinke 12 des ersten Sicherungselements 14, das an einem Doppelhebelarm 16 derart angeordnet ist, dass bereits die kinetische Energie des aufprallenden Laufwagens 3 die Freigabe des Sicherungselements 14 auslöst. Dadurch erfolgt die Freigabe zugleich in der vorbestimmten Position des als Anschlag wirkenden Doppelhebelarms 16 auf dem Schienenabschnitt 9. In ähnlicher Weise wird die Rückstellbewegung erst dann eingeleitet, wenn der Laufwagen 3 einen zweiten Entriegelungshebel 17 auf dem zweiten Anschlussschienenelement 6 erreicht und diesen mit einem nach unten vorspringenden Mitnehmer 18 betätigt hat. Dadurch wird die Sperrklinke 13 des zweiten Sicherungselements 15 entriegelt und die Rückstellbewegung unter dem Einfluss der Rückstellkraft F_{R} des Federelements 10 ausgelöst.

### Bezugszeichenliste

- 1: Fördervorrichtung
- 2: Schwenkarm
- 3: Laufwagen
- 4: Anschlussschienenelement
- 5: Erste Ebene

- 6: Anschlussschienenelement
- 7: Zweite Ebene
- 8: Schwenkachse
- 9: Schienenabschnitt
- 10: Federelement

- 11: Dämpfer
- 12: Sperrklinke
- 13: Sperrklinke
- 14: Sicherungselement
- 15: Sicherungselement

- 16: Doppelhebelarm
- 17: Entriegelungshebel
- 18: Mitnehmer

- FR: Rückstellkraft

## Patentansprüche

1. Fördervorrichtung (1) mit zumindest einem an einer Führungsschiene beweglich angeordneten Laufwagen (3) und mit einem einen Schienenabschnitt (9) tragenden beweglichen Element, welches entweder in eine mit einem ersten Anschlussschienenelement (4) oder in eine mit einem zweiten Anschlussschienenelement (6) verbundene Position bewegbar ist wobei die beiden Anschlussschienenelemente (4, 6) in unterschiedlichen, vertikal zueinander beabstandeten Ebenen (5, 7) angeordnet sind und dass das bewegliche Element als ein um eine im Wesentlichen horizontale Schwenkachse (8) von einer oberen Position, in welcher der Schienenabschnitt (9) mit dem ersten Anschlussschienenelement (4) verbunden ist, in eine untere Position, in welcher der Schienenabschnitt (9) mit dem zweiten Anschlussschienenelement (6) verbunden ist, schwenkbeweglicher Schwenkarm (2) ausgeführt ist **dadurch gekennzeichnet, dass** die obere Position und/oder die untere Position des Schwenkarms (2) durch ein Sicherungselement (14, 15) vorübergehend festlegbar ist.

2. Fördervorrichtung (1) nach Anspruch 1, **dadurch gekennzeichnet, dass** der Schwenkarm (2) entgegen einer Rückstellkraft (F_{R}) von einer oberen Position durch eine Belastung mit zumindest einem Laufwagen (3) oder einer zusätzlichen, mit zumindest einem Laufwagen (3) verbundenen Traglast in die untere Position absenkbar ausgeführt ist und dass der von dem Laufwagen (3) entlastete Schwenkarm (2) aufgrund der Rückstellkraft (F_{R}) entgegen der Schwerkraft selbsttätig in die obere Position beweglich ist.

3. Fördervorrichtung (1) nach dem Anspruche 2, **dadurch gekennzeichnet, dass** die Rückstellkraft (F_{R}) durch ein Federelement (10) und/oder ein Gegengewicht einleitbar ist.

4. Fördervorrichtung (1) nach Anspruch 3, **dadurch gekennzeichnet, dass** der Schwenkarm (2) als ein Doppelhebelarm (16) ausgeführt ist und dass das Federelement (10) und/oder das Gegengewicht an einem dem Schienenabschnitt (9) abgewandten Arm angeordnet ist.

5. Fördervorrichtung (1) nach zumindest einem der vorangehenden Ansprüche, **dadurch gekennzeichnet, dass** dem Schwenkarm (2) ein Dämpfer (11) zugeordnet ist, welcher die Absenkgeschwindigkeit reduziert.

6. Fördervorrichtung (1) nach zumindest einem der vorangehenden Ansprüche, **dadurch gekennzeichnet, dass** die Absenkbewegung bei Erreichen einer vorbestimmten Position des Laufwagens (3) auf dem Schienenabschnitt (9) berührend oder berührungslos auslösbar ist.

7. Fördervorrichtung (1) nach zumindest einem der vorangehenden Ansprüche, **dadurch gekennzeichnet, dass** die Rückstellbewegung von der unteren Position in die obere Position durch den Laufwagen (3) bei Erreichen einer vorbestimmten Position des Laufwagens (3) auf dem zweiten Anschlussschienenelement (6) berührend oder berührungslos auslösbar ist.

8. Fördervorrichtung (1) nach zumindest einem der vorangehenden Ansprüche, **dadurch gekennzeichnet, dass** der Schwenkarm (2) mit einem Anlagekörper für den Laufwagen (3) ausgestattet ist, welcher eine definierte Position des Laufwagens (3) während der Absenkbewegung sicherstellt.

9. Fördervorrichtung (1) nach zumindest einem der vorangehenden Ansprüche, **dadurch gekennzeichnet, dass** die Schwenkachse (8) in einer zwischen einer oberen Ebene (5) des ersten Anschlussschienelement (4), und einer unteren Ebene (7) des zweiten Anschlussschienelement (6) verlaufenden Ebene horizontal verläuft.

## Claims

1. Conveying apparatus (1) having at least one carriage (3), which is arranged in a movable manner on a guide rail, and having a movable element, which bears a rail portion (9) and can be moved either into a position in which it is connected to a first connection-rail element (4) or into a position in which it is connected to a second connection-rail element (6), wherein the two connection-rail elements (4, 6) are arranged in different, vertically spaced-apart planes (5, 7), and the movable element is configured in the form of a pivot arm (2) which can be pivoted about an essentially horizontal pivot pin (8) from an upper position, in which the rail portion (9) is connected to the first connection-rail element (4), into a lower position, in which the rail portion (9) is connected to the second connection-rail element (6), **characterized in that** the upper position and/or the lower position of the pivot arm (2) can be secured temporarily by a securing element (14, 15).

2. Conveying apparatus (1) according to Claim 1, **characterized in that** the pivot arm (2) is configured such that it can be lowered, counter to a restoring force (F_{R}), from an upper position, by loading with at least one carriage (3) or an additional carrying load connected to at least one carriage (3), into the lower position, and **in that** the pivot arm (2) relieved of loading by the carriage (3) can be moved automatically into the upper position, counter to gravitational force, on account of the restoring force (F_{R}).

3. Conveying apparatus (1) according to Claim 2, **characterized in that** the restoring force (F_{R}) can be initiated by a spring element (10) and/or a counterweight.

4. Conveying apparatus (1) according to Claim 3, **characterized in that** the pivot arm (2) is configured in the form of a double-lever arm (16), and **in that** the spring element (10) and/or the counterweight are/is arranged on an arm directed away from the rail portion (9).

5. Conveying apparatus (1) according to at least one of the preceding claims, **characterized in that** the pivot arm (2) is assigned a damper (11), which reduces the lowering speed.

6. Conveying apparatus (1) according to at least one of the preceding claims, **characterized in that** the lowering movement can be triggered by contact, or in a contactless manner, when the carriage (3) reaches a predetermined position on the rail portion (9).

7. Conveying apparatus (1) according to at least one of the preceding claims, **characterized in that** the restoring movement from the lower position into the upper position can be triggered by the carriage (3) by contact, or in a contactless manner, when the carriage (3) reaches a predetermined position on the second connection-rail element (6).

8. Conveying apparatus (1) according to at least one of the preceding claims, **characterized in that** the pivot arm (2) is provided with an abutment body for the carriage (3), said abutment body ensuring a defined position of the carriage (3) during the lowering movement.

9. Conveying apparatus (1) according to at least one of the preceding claims, **characterized in that** the pivot pin (8) runs horizontally in a plane running between an upper plane (5) of the first connection-rail element (4) and a lower plane (7) of the second connection-rail element (6).

## Revendications

1. Dispositif transporteur (1) comprenant au moins un chariot de roulement (3) disposé de manière déplaçable sur un rail de guidage et un élément déplaçable portant une section de rail (9) qui peut être déplacé soit dans une position associée à un premier élément de rail de raccordement (4) soit dans une position associée à un deuxième élément de rail de raccordement (6), les deux éléments de rail de raccordement (4, 6) étant disposés dans différents plans (5, 7) espacés verticalement l'un de l'autre et l'élément déplaçable étant réalisé sous la forme d'un bras pivotant (2) déplaçable par pivotement autour d'un axe de pivotement essentiellement horizontal (8) depuis une position supérieure dans laquelle la section de rail (9) est connectée au premier élément de rail de raccordement (4), dans une position inférieure dans laquelle la section de rail (9) est connectée au deuxième élément de rail de raccordement (6), **caractérisé en ce que** la position supérieure et/ou la position inférieure du bras pivotant (2) peuvent être fixées temporairement par un élément de fixation (14, 15).

2. Dispositif transporteur (1) selon la revendication 1, **caractérisé en ce que** le bras pivotant (2) est réalisé de manière à pouvoir être abaissé dans la position inférieure à l'encontre d'une force de rappel (F_{R}) depuis une position supérieure par une sollicitation avec au moins un chariot de roulement (3) ou une charge de support supplémentaire connectée à au moins un chariot de roulement (3), et **en ce que** le bras pivotant (2) déchargé par le chariot de roulement (3) peut être déplacé automatiquement dans la position supérieure à l'encontre de la pesanteur sous l'effet de la force de rappel (F_{R}).

3. Dispositif transporteur (1) selon la revendication 2, **caractérisé en ce que** la force de rappel (F_{R}) peut être introduite par un élément de ressort (10) et/ou un contrepoids.

4. Dispositif transporteur (1) selon la revendication 3, **caractérisé en ce que** le bras pivotant (2) est réalisé sous la forme d'un double bras de levier (16) et **en ce que** l'élément de ressort (10) et/ou le contrepoids sont disposés au niveau d'un bras opposé à la section de rail (9).

5. Dispositif transporteur (1) selon au moins l'une quelconque des revendications précédentes, **caractérisé en ce qu'**un amortisseur (11) est associé au bras pivotant (2), lequel réduit la vitesse d'abaissement.

6. Dispositif transporteur (1) selon au moins l'une quelconque des revendications précédentes, **caractérisé en ce que** le mouvement d'abaissement peut être déclenché par contact ou sans contact à l'obtention d'une position prédéterminée du chariot de roulement (3) sur la section de rail (9).

7. Dispositif transporteur (1) selon au moins l'une quelconque des revendications précédentes, **caractérisé en ce que** le mouvement de rappel de la position inférieure dans la position supérieure peut être déclenché par contact ou sans contact par le chariot de roulement (3) à l'obtention d'une position prédéterminée du chariot de roulement (3) sur le deuxième élément de rail de raccordement (6).

8. Dispositif transporteur (1) selon au moins l'une quelconque des revendications précédentes, **caractérisé en ce que** le bras pivotant (2) est muni d'un corps d'appui pour le chariot de roulement (3), lequel garantit une position définie du chariot de roulement (3) pendant le mouvement d'abaissement.

9. Dispositif transporteur (1) selon au moins l'une quelconque des revendications précédentes, **caractérisé en ce que** l'axe de pivotement (8) s'étend horizontalement dans un plan s'étendant entre un plan supérieur (5) du premier élément de rail de raccordement (4) et un plan inférieur (7) du deuxième élément de rail de raccordement (6).
